**Europäisches Patentamt**

**European Patent Office**

**Office européen des brevets**

(19)

(11) Veröffentlichungsnummer: **0 010 551**
**B1**

(12) # EUROPÄISCHE PATENTSCHRIFT

(45) Veröffentlichungstag der Patentschrift: **01.07.81**

(21) Anmeldenummer: **78101197.8**

(22) Anmeldetag: **23.10.78**

(51) Int. Cl.³: **F 24 J 3/04, F 25 B 29/00, F 25 B 15/06, F 24 D 11/02**

(54) **Absorptions-Wärmepumpenanlage.**

(30) Priorität: **13.09.78 CH 9588/78**

(43) Veröffentlichungstag der Anmeldung:
**14.05.80 Patentblatt 80/10**

(45) Bekanntmachung des Hinweises auf die Patenterteilung:
**01.07.81 Patentblatt 81/26**

(84) Benannte Vertragsstaaten:
**DE FR GB NL**

(56) Entgegenhaltungen:
DE - A - 2 552 538
DE - A - 2 648 855
DE - A - 2 659 641
FR - A - 1 042 435
US - A - 2 272 871
US - A - 2 298 924
US - A - 2 817 958
US - A - 3 561 227

R. PLANK: "Die Kleinkältemaschine"
1960, Springer Verlag, Berlin,
Seiten 324—327

(73) Patentinhaber: **GEBRÜDER SULZER
AKTIENGESELLSCHAFT**
**Zürcherstrasse 9**
**CH-8401 Winterthur (CH)**

(72) Erfinder: **Lüthi, Johannes, Dr.sc.tech.**
**Sonnhaldenstrasse 12**
**CH-8413 Neftenbach (CH)**
Erfinder: **Ziegler, Georg, Dipl.-Ing.**
**Johannesstrasse 30**
**CH-8404 Winterthur (CH)**

(74) Vertreter: **Sparing, Nikolaus, Dipl.-Ing.**
**Lindemannstrasse 31**
**D-4000 Düsseldorf (DE)**

Courier Press, Leamington Spa, England.

## Absorptions-Wärmepumpenanlage

Die Erfindung betrifft eine Absorptions-Wärmepumpenanlage für die Heizung und/oder Kühlung eines Gebäudes, in welcher Anlage Wasser als Arbeitsmittel durch Verdampfer, Absorber, Austreiber, Kondensator und Entspannungsorgan zirkuliert, und ein auch bei hohen Konzentrationen pumpbares, hygroskopisches Absorptionsmittel mit Hilfe einer Pumpe den Absorber und den Austreiber durchsetzt, wobei der Verdampfer durch eine unmittelbare Verbindung seiner freien Wasseroberfläche mit dem Absorber ein direkt arbeitender Verdampfer ist, der darüberhinaus Teil eines zweiten Wasserkreislaufs mit mindestens einer Niedrigtemperatur-Wärmequelle ist. Bevorzugte Einsatzbereiche der Anlage sind Heizung oder Klimatisierung von Wohngebäuden, insbesondere von Ein- oder Mehrfamilienhäusern.

Anlagen der genannten Art sind in der Verwendung als Absorptions-Kälteanlagen bekannt (US—PS 3 561 227 und 2 298 924). Die dem zu kühlenden Medium entzogene Wärme wird bei dieser Anlagen als Verlust an ein Kühlmittel, z.B. Wasser oder die umgebende Atmosphäre, abgegeben. Da ein gleichzeitiger Einsatz dieser Anlagen als Wärmepumpen für Heizzwecke nicht vorgesehen ist, werden die dafür zu beachtenden Besonderheiten weder erwähnt noch die damit zusammenhängenden Probleme gelöst. Eines dieser Probleme ist die Anhebung der aus einer Niedrigtemperatur-Wärmequelle gewonnenen Wärme auf ein Temperaturniveau, auf dem sie für Heizzwecke nutzbar ist.

Wird weiterhin in bekannter Weise ("gwf Gas + Erdgas", 119. Jahrgang (1978), Heft 3, Seite 107 "Betriebserfahrungen mit einer Gasabsorptionswärmepumpe") für die Erzeugung von Heizwärme in einer Wärmepumpen-Anlage, die mit einem Kompressions- oder einem Absorptionskreislauf arbeitet, die auf ein nutzbares Niveau zu bringende Niedrigtemperatur-Wärme ganz oder teilweise der Aussen- oder Umgebungsluft entzogen, so können zwei Betriebsweisen unterschieden werden. Bei der einen liegt — wie bei den Kühlanlagen nach den erwähnten US—PS — die Verdampfungstemperatur bei 0°C oder darüber. Dies hat den Vorteil, dass der Aussenluft-Wärmetauscher nicht einfrieren kann, jedoch ist die Betriebszeit der Anlage erheblich eingeschränkt, da sie auf Zeiten beschränkt ist, in denen die Lufttemperatur über 0°C liegt.

Wählt man die Verdampfungstemperatur <0°C, so bilden sich je nach Wetterlage an der Aussenfläche des Verdampfers Reif oder Eis; dadurch werden der Wärmeübergang auf das Arbeitsmittel und damit der Wirkungsgrad der Anlage erheblich beeinträchtigt, so dass diese periodisch abgetaut werden muss.

In einer solchen Anlage kann allerdings der Luft auch bei Aussentemperaturen von z.B. —5°C noch Wärme entzogen werden; ihre Betriebsdauer ist daher hoch und damit die während des Winters der Umgebung entzogene und dem Heizsystem zugeführte Wärmemenge gross.

Eine Aufgabe der Erfindung ist es, die Vorteile der geschilderten Betriebsweisen für die Erzeugung von Heizwärme möglichst weitgehend gemeinsam auszunutzen, ohne ihre Nachteile in Kauf zu nehmen. Insbesondere soll die im Wärmepumpenbetrieb mögliche Betriebszeit der Anlage vergrössert werden, ohne dass Verdampfungstemperaturen unter 0° angewendet werden müssen. Geforderte Randbedingungen bei der Lösung dieser Aufgabe sind weiterhin ein möglichst hoher Wirkungsgrad der Anlage — d.h. ein möglichst grosses Verhältnis von entzogener Nutzwärme zu in die Anlage eingespeister Wärme aus einer Fremdquelle — und die Verwendung von Wärme statt Elektrizität als der Anlage zugeführter Energie, wobei inbesondere eine Zusatzheizung für Betriebszeiten, in denen die Anlage nicht als Wärmepumpe arbeiten kann, auf einfache Weise möglich sein muss.

Die Lösung dieser etwas komplexen Aufgabe erfolgt erfindungsgemäss dadurch, dass der Verdampfer als Energiespeicher ausgebildet ist, und dass ferner das Absorptionsmittel und seine Konzentration so gewählt sind, dass die Absorptionstemperatur beim am Tripelpunkt des Wassers herrschenden Druck grösser als diejenige eines ihn durchströmenden, die Absorptionswärme abführenden Kühlmittels ist.

Durch die Verwendung eines Energiespeichers auf der kalten Seite sind die Zeiten von Wärmeaufnahme und Wärmeabgabe der Anlage — zumindest weitgehend — unabhängig voneinander, so daß beispielsweise in Zeiten, in denen am Tage, also besonders mittags und nachmittags, Außentemperaturen von über 0°C herrschen, der Speicher aufgeladen und während der Nacht- und/oder Morgenstunden wieder entladen werden kann.

Die Wahl von Wasser als Arbeitsmittel sowie eines geeigneten Absorptionsmittels in einem günstigen Konzentrationsbereich erlaubt es, den Speicher — und damit den Verdampfer und Absorber während des Normalbetriebes — beim Druck am Tripelpunkt des Wassers, also bei einem Druck von etwa 6 mbar zu betreiben, und dadurch bei einer die Energiezufuhr übersteigenden Wärmeentnahme durch Eisbildung die latent gespeicherte Erstarrungswärme auszunutzen. Eisspeicher sind zwar bekannt; ihre bisherigen Ausführungsformen, in denen die Wärme indirekt durch Röhren oder die Behälterwand ausgetauscht wird, haben den großen Nachteil, daß das Eis sich zuerst an den Röhren oder Wänden bildet und wie eine immer dicker werdende Isolationsschicht den Wärmefluß blockiert. Diese Schwierigkeit wird bei der vorliegenden Anlage dadurch beseitigt, daß der Speicher gleichzeitig der direkte Verdampfer in dem Wärmepumpen-Kreislauf ist.

Wasser, das im Speicher noch nicht ausgefroren ist, wird dabei durch den Außenluftwärmetauscher gepumpt und entzieht dort der Umgebungsluft Wärme. Da das gleiche Medium (Wasser) als Arbeitsmittel im Absorptionskreislauf als Mittel im Speicher und als Wärmeträger im Außenluftwärmetauscher dient, ist kein zusätzlicher Wärmetauscher wie bei bisherigen Anlagen mit Außenluftwärmetauschern und Speichern notwendig, der ein zusätzliches Temperaturgefälle erforderlich macht.

Weitere Vorteile der neuen Anlagen, die sich zum Teil in Verbindung mit denin den Unteransprüchen niedergelegten Weiterentwicklungen und vorteilhaften Ausgestaltungen der Erfindung ergeben, bestehen beispielsweise darin, daß während häufig vorkommender Wetterlagen der Außenluftwärmetauscher nur während des Tages in Betrieb steht, wo der behördlich zugelassene Lärmpegel höher ist als nachts. Der Eisspeicher hat darüberhinaus — wegen der möglichen Ansnutzung der latenten Erstarrungswärme — eine große Speicherkapazität bei konstanter Temperatur; zusätzliche Wärmetauscherflächen werden in dem Speicher selbst nicht benötigt. Die Verwendung von Abwasser als Niedrigtemperatur-Wärmequelle ist durch die zeitliche Entkopplung von Wärmeaufnahme und -abgabe sinnvoll möglich. Die Verwendung von Wasser als Arbeitsmittel ist absolut ungefährlich und umweltfreundlich; Grund- oder Flußwasser, die besonders als Niedrigtemperatur-Wärmequelle dienen können, werden mit Sicherheit nicht verschmutzt.

Ferner kann der Austreiber ohne Zwischenwärmeträger direkt durch einen Öl- und/oder Gasbrenner geheizt werden, da der Druck im Austreiber <1 bar ist. Bei anderen Arbeitsmitteln als Wasser liegt der Druck im Austreiber über dem atmosphärischen Druck, wodurch der Kessel unter Umständen besonderen Sicherheitsbestimmungen unterliegt. Durch die Energiezufuhr zu der Anlage mittels Öl oder Gas ist schließlich die Zusatzheizung für kalte Tage sehr einfach und billig im System einzubeziehen.

Nutzt man die Anlage zur Kühlung eines Hauses, wozu beispielsweise als Niedrigtemperatur-Wärmequelle die Raumluft des zu klimatisierenden Gebäudes dienen kann, so ist es besonders günstig, in Gegenden mit Kontinentalklima — heiße Tage, relativ kalte Nächte — im Speicher durch Wärmeabgabe an die kalte Nachtluft mit relativ günstigem Wirkungsgrad während der Nacht Eis zu erzeugen und "Kälte" zu speichern; das Eis wird dann durch die der Raumluft entzogene Wärme wieder geschmolzen.

Weitere Merkmale der Erfindung ergeben sich aus nachfolgender Beschreibung von Ausführungsbeispielen im Zusammenhang mit der Zeichnung:

Fig. 1 zeigt ein Anlageschema für eine Anlage zur Raum- und Brauchwasserheizung, während

Fig. 2 eine Variante des rechts der Linie II—II liegenden Teils der Anlage nach Fig. 1 wiedergibt; diese ist besonders für die geschilderte Verwendung der Anlage zur Raumkühlung bzw. -klimatisierung geeignet.

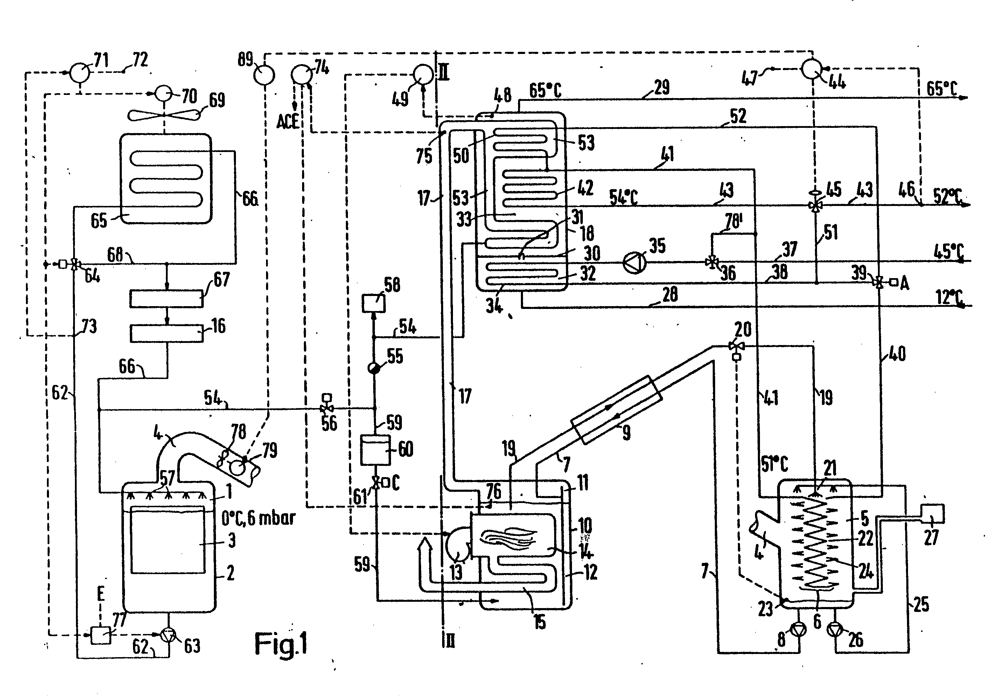

Ausgehend vom Dampfraum 1 eines als Direktverdampfers ausgebildeten Eisspeichers 2 (Fig. 1), in dem ein Teil des als Arbeitsmittel dienenden Wassers als schematisch dargestellter Eisblock 3 gezeigt ist, verbindet eine teilweise dargestellte Dampfleitung 4 den Verdampfer 2 mit einem Absorber 5. In dessen Dampfraum wird der Wasserdampf durch ein Absorptionsmittel unter Wärmeentwicklung absorbiert und als mit Wasser angereicherte Absorptionsmittellösung am Boden des Absorbers 5 gesammelt. Die dabei entwickelte Wärme wird mit Hilfe eines in einem zweiteiligen Rohrpakets, in diesem Fall in einer Doppelspirale 6, zirkulierenden Kühlmittels — im vorliegenden Fall durch ein als Wärmeträger einer Warmwasserheizung dienendes Wasser — abgeführt, was später ausführlich beschrieben wird.

Eine Leitung 7, in der eine Förderpumpe 8 vorgesehen ist, führt über einen Wärmetauscher 9 vom Absorber 5 in einen Austreiber 10, wo sich die Leitung 7 in einen Überlauf 11 und einen nahe dem Boden des Austreibers 10 angeordneten Auslaß 12 verzweigt. Der Auslaß 12 nahe dem Boden soll einen Kurzschluß zwischen wasserreichem, dem Austreiber 10 zufließenden, und wasserarmem, aus ihm in den Absorber 5 strömenden Absorptionsmittel verhindern; die Aufgabe des im Dampfraum des Austreibers 10 endenden Überlaufs 11 besteht darin, ein Ausfließen der wasserreichen Lösung zu ermöglichen, auch wenn der Bodenauslaß beispielsweise durch — infolge zu starkem Wasserentzuges — auskristallisierendes Absorptionsmittel verstopft ist.

Der Austreiber 10 ist mit Hilfe eines Öl- und/oder Gasbrenners 13 beheizt, dessen Flamme in einer Brennkammer 14 liegt, die unter dem Flüssigkeitsspiegel im Austreiber 10 angeordnet ist. Die Rauchgase verlassen, nachdem sie einen Teil ihrer Wärme an die Flüssigkeit im Austreiber 10 abgegeben haben, die Brennkammer 14 über eine Rauchgasleitung 15, um — unter Umständen nach weiterer Rückgewinnung der in ihnen enthaltenen Wärme, beispielsweise in einem Wärmetauscher 16 — aus der Anlage weggeführt zu werden.

Durch die Aufheizung im Austreiber 10 wird Wasserdampf aus dem Absorptionsmittel ausgetrieben und durch eine weitere Dampfleitung 17 in einen Kondensator 18 geführt. Das bei der Trennung aufkonzentrierte Absorptionsmittel gelangt aus der Flüssigkeit im Austreiber 10 über eine Leitung 19 in den Wärmetauscher 9, wo es im Gegenstrom zu seiner wasserreichen, in der Leitung 7 fließenden Lösung an diese Lösung Wärme abgibt, und fließt über ein regelbares Drosselorgan 20 in den Absorber 5. Dort rieselt es, aus einer Düse 21 austretend, über Innenwindungen 22 der Doppelspirale 6, Wasser aufnehmend und Wärme abgebend, herab und sammelt sich im Absorber 5, von dem die Leitung 7 ausgeht, womit der Absorptionsmittel-Kreislauf geschlossen ist.

Das Flüssigkeitsniveau des Kondensates im Absorber 5 wird durch Beeinflussung des Drosselorgans 20 in der Leitung 19 von einem Niveauregler 23, beispielsweise einem Schwimmer, mindestens annähernd auf konstantem Niveau gehalten.

Wegen irreversibler Verluste beim Wärmetauscher ist es vorteilhaft, die zirkulierende Menge an Absorptionsmittel-Lösung möglichst klein zu halten; um trotzdem im Absorber eine gute Wärmeabfuhr zu erreichen, ohne daß der Wärmetauscher für den Wärmeübergang auf das wärmeabführende Wasser übermäßig lang wird, ist dieser Wärmetauscher in der Form der Doppelspirale 6 ausgelegt. Seine von dem Rücklaufwasser der Heizanlage zuerst beaufschlagten Außenwindungen 24 werden dabei von wasserreichem Kondensat des Absorptionsmittels im Gleichstrom berieselt, das in einem eigens dafür vorgesehene, dem Absorber 5 zugeordneten Zirkulationskreislauf 25 von einer Umwälzpumpe 26 umgewälzt wird.

Die Innenwindungen, die — wie bereits erwähnt — von konzentrierter Absorptionsmittel-Lösung berieselt werden, durchsetzt das aus den Außenwindungen 24 kommende vorgeheizte Wasser anschließend im Gegenstrom zum herabrieselnden Absorptionsmittel.

An den Dampfraum des Absorbers 5 ist schließlich noch eine nur schematisch angedeutete Vakuumpumpe 27 angeschlossen, deren Aufgabe darin besteht, durch Leckstellen in das — während des Normalbetriebes bei relativ niedrigem Druck arbeitende — System eingedrungenes Gas zu entfernen und eine Aufrechterhaltung des notwendigen Vakuums von etwa 6 mbar zu gewährleisten.

Der Kondensator 18, in dem der das Arbeitsmittel der Wärmepumpe bildende Wasserdampf kondensiert wird, ist vollständig mit Wasser gefüllt, das als Kaltwasser über eine Leitung 28 zugeführt und als heißes Brauchwasser über eine Leitung 29 Verbrauchern zugeleitet wird. Er ist darüberhinaus durch eine Trennwand 30, die nur eine Durchtrittsöffnung 31 relativ geringen Querschnitts hat, in einen Kaltwasser- und einen Heißwasserraum 32 bzw. 33 getrennt; die Wand 30 hat die Aufgabe, eine Durchmischung von relativ kaltem und heißem Brauchwasser zu verhindern. Die Brauchwasservorlauf-Temperatur wird dabei am Brauchwasseraustritt aus dem Kondensator 18 von einem Temperaturfühler 48 gemessen, durch den über einen Ein/Aus-Regler 49 der

Brenner 13 im Austreiber 10 in bzw. außer Betrieb gesetzt wird.

In dem mit Brauchwasser gefüllten Kaltwasserraum 32 ist ein Wärmetauscher 34 vorgesehen; er ist an der Eintrittsseite für das ihn durchsetzende Wasser über eine Pumpe 35 und ein Dreiwegventil 36 an die Rücklaufleitung 37 einer nicht weiter dargestellten Heizungsanlage angeschlossen, während sein Austritt über eine Leitung 38 mittels eines weiteren Dreiwegventils 39 in eine Leitung 40 mündet. Diese Leitung 40 dient als Zuführleitung für das im Absorber 5 aufzuheizende Wasser und ist daher mit den Außenwindungen 24 der Doppelspirale 6 verbunden.

Der Wärmetauscher 34 im Kaltwasser 32 hat eine zweifache Aufgabe: Während des — keine Raumheizung erfordernden — Sommerbetreibes der Anlage wird das Brauchwasser mit Hilfe der im Absorber 5 gewonnenen Wärme vorgeheizt, ehe es durch den aus dem Austreiber 10 kommenden, in einem Wärmetauscher oder einer Dampfkammer 53, 54 kondensierenden Wasserdampf auf seine Endtemperatur gebracht wird. Während der übrigen, später näher beschriebenen Betriebszustände wird das Rücklaufwasser der Heizungsanlage aus der Leitung 37 im Wärmetauscher 34 durch kaltes Brauchwasser gekühlt, um eine für den thermodynamischen Wirkungsgrad günstige, möglichst tiefe Eintrittstemperatur des Wassers in den Absorber 5 zu erreichen.

Das austrittsseitige Ende der Innenwindungen 22 der Doppelspirale 6 ist über eine Leitung 41, von der eine Abzweigleitung 78' zum Dreiwegventil 36 führt, an einen weiteren Wärmetauscher 42 angeschlossen, der im Heißwasserraum 33 des Kondensators 18 vorgesehen ist. In diesem wird das im Absorber 5 vorgeheizte Wasser für die Heizungsanlage auf die gewünschte Endtemperatur erhitzt; es fließt dann durch eine Leitung 43 und ein von einem Temperaturregler 44 gesteuertes Dreiwegventil 45, in dem die für Heizungsanlagen zur Regelung der Vorlauftemperatur übliche Rücklaufbeimischung erfolgt, als Vorlauf in die nicht weiter dargestellte Heizungsanlage. Wie allgemein üblich, ist der Regler 44 von einem Istwert-Temperaturfühler 46 für die Vorlauftemperatur und einem Außentemperaturfühler 47 beeinflußt. Da, wie vorstehend geschildert, das kälteste Wasser des Heizungssystems in der Leitung 38 fließt, erfolgt die beschriebene Rücklaufbeimischung von dieser Leitung 38 aus über eine Verbindungsleitung 51, um die dafür benötigte Wassermenge möglichst klein zu halten.

Der Wärmetauscher 42 ist an der Eintrittsseite für das ihn durchfließende Wasser mit dem Austritt eines weiteren Wärmetauschers 50 verbunden, der mit seinem Eingang über eine Leitung 52 an das Dreiwegventil 39 angeschlossen ist. Der Wärmetauscher 50 liegt in der bereits erwähnten Dampfkammer 53, in die die vom Austreiber 10 kommende, wasserdampfführende Dampfleitung 17 mündet.

Die Funktionsweise und die Zusammenschaltung der verschiedenen Wärmetauscher 34, 42 und 50 bei verschiedenen Betriebszuständen der Anlage werden später beschrieben.

An die Dampfkammer 53 schließt die ebenfalls bereits erwähnte Leitung 54 an, die über ein als Kondensattopf ausgebildetes Entspannungsorgan 55 und ein Absperrorgan 56 in den Verdampfer 2 führt, womit der Arbeitsmittelkreislauf der Anlage geschlossen ist. Die Leitung 54 endet in Austrittsdüsen 57, durch die das Wasser in den Verdampfer 2 eingespritzt wird.

Stromaufwärts des Kondensattopfes 55 ist eine zweite Vakuumpumpe 58 vorgesehen, die ebenfalls der Aufrechterhaltung des niedrigen Druckes bei Gaseinbrüchen durch Leckstellen dient.

In Strömungsrichtung vor dem Absperrorgan 56 zweigt aus der Leitung 54 eine Leitung 59 ab, die über einen zusätzlichen Wasserspeicher 60 relativ geringer Kapazität und ein weiteres Absperrorgan 61 in den Austreiber 10 mündet. Mittels dieser Leitung 59 kann durch Schließen des Organs 56 und gleichzeitiges Öffnen des Organs 61 der Eisspeicher 2 kurzgeschlossen werden; dies erfolgt in Zeiten, in denen ein Wärmepumpenbetrieb nicht möglich ist und der Speicher 2 vollständig "eingefroren" ist, weil eine geeignete Niedrigtemperatur-Wärmequelle mit ausreichender Kapazität fehlt. Der Wasserspeicher 60 dient dabei als mit Wasser gefülltes Puffervolumen, durch das die Lauge im Austreiber 10 verdünnt und damit ein Auskristallisieren verhindert wird.

Der die für die Wärmespeicherung zu nutzenden Niedrigtemperatur-Wärmequellen enthaltende Sekundärwasserkreislauf weist eine Leitung 62, die vom Boden des Verdampfers 2 über eine Förderpumpe 63 und ein Dreiwegeventil 64 in einen Außenluftwärmetauscher 65 führt, auf; von diesem geht eine Leitung 66 aus, die über als zusätzliche Niedrigtemperatur-Wärmequellen dienende Wärmetauscher 67 und 16 für die Wärmerückgewinnung aus Abwasser bzw. Rauchgasen in die zu den Düsen 57 führende Leitung 54 mündet. Über eine im Dreiwegventil 64 endende, die Leitungen 62 und 66 verbindende Leitung 68 kann bei Temperaturen der Umgebungsluft unter 0°C der Außenluftwärmetauscher 65 wasserseitig kurzgeschlossen werden; dabei wird er vorzugsweise gegenüber dem Verdampfer 2 auf einer statischen Höhe angeordnet, so daß er sich bei diesem Kurzschließen selbsttätig entleert und sein Einfrieren verhindert wird. Mit 69 ist ein von einem Motor 70 angetriebener Ventilator bezeichnet, der die Luft durch den Wärmetauscher 65 bläst.

Der Motor 70, das Ventil 64 und die Pumpe 63 werden ein- bzw. aus- oder umgeschaltet durch ein Steuerglied 71, dem als Eingangssignal die bei 72 gemessene Außenlufttemperatur und die durch einen Temperaturfühler 73 gemessene Wassertemperatur im Verdampfer 2 zufließen. Während die Außenlufttemperatur einen Kurzschluß des Wärmetauschers 65 und ein Stillsetzen des Motors 70 bei Lufttemperaturen unter 0°C bewirkt, fließt sein Stellsignal für eine gleichzeitige Reduktion der Leistung der Pumpe 63, die aus diesem Grunde zweistufig ausgebildet ist, zunächst auf ein Steuerelement 77, dem als weiteres Eingangssignal E ein Stellsignal aus einem noch zu beschreibenden Steuerorgan 74 aufgeschaltet ist. Das Steuerelement 77 veranlaßt dann seinerseits — je nach dem durch das Organ 74 angezeigten Betriebszustand der Anlage — eine Reduktion oder ein Abschalten der Pumpe 63, wobei die Reduktion der Pumpenleistung bei einem Kurzschließen des Außenluftwärmetauschers 65 im Normalbetrieb der Anlage, also im Wärmepumpenbetrieb, und Lufttemperaturen unter 0°C vorgenommen werden, während ein Abschalten bei dem noch zu beschreibenden Kaltwetterbetrieb und ebenfalls Lufttemperaturen unter 0°C erfolgt.

Der Temperaturfühler 73 beeinflußt die genannten Organe 63, 64 und 70 bei relativ hohen Lufttemperaturen, bei denen der Verdampfer 2 wegen eines ausreichenden Angebots an zu transformierender Wärme nicht als Eisspeicher und die Anlage nicht am Tripelpunkt des Wassers, sondern als gewöhnlicher Wasserspeicher bei höherem Druck und höheren Temperaturen betrieben werden, ein Zustand, der sich bei ausreichendem Wärmeangebot selbsttätig einstellt. In diesem, während der Übergangszeiten häufigen Betriebszustand ist ein Wärmeentzug aus der Außenluft selbstverständlich nur möglich, wenn die Temperatur über derjenigen des Wassers im Speicher 2 liegt. In diesem Fall erfolgt also ein Einsatz des Wärmetauschers 65 und die damit verbundene Schaltung in den Organen 63, 64 und 70 nur bei einer vorgegebenen, positiven Mindesttemperatur-Differenz zwischen den Meßwerten bei 72 und 73.

Das bereits kurz erwähnte Regel- oder Steuerorgan 74 dient dazu, bei durch starken Wärmebedarf ausgelöster "Erschöpfung" des Speichers 2, die durch ein Erstarren des gesamten Speicherinhalts gekennzeichnet ist, ein Umschalten der Anlage vom Wärmepumpenbetrieb auf reinen Heiz- oder Kaltwetterbetrieb zu ermöglichen, bei dem die Anlage als reine Heizungsanlage ausschließlich durch den als Hochtemperatur-Wärmequelle wirkenden Brenner 13 mit hochwertiger Energie versorgt wird.

Der erwähnte Erschöpfungszustand im Speicher 2 bewirkt ein Ansteigen der Laugenkonzentration im Austreiber 10, was ein Sinken des Druckes und/oder ein Steigen der Temperatur der Flüssigkeit im Austreiber 10 zur Folge hat. Als Beispiel für die Erfassung dieses Zustandes dienen daher ein Druckfühler 75 in der Dampfleitung 17 und gleichzeitig ein Temperaturfühler 76, der die Temperatur des konzentrierten Absorptionsmittels im Austreiber 10 mißt. Beide Meßwerte sollen dabei sicherstellen, daß die Konzentration der Lauge einen bestimmten, oberen Grenzwert nicht übersteigt, bei dem das Absorptionsmittel noch in homogener wässriger Lösung vorliegt und nicht auskristallisiert.

Ein unzulässiges Steigen dieser Konzentration zeigt gleichzeitig — wegen der stark verminderten Zufuhr an Wasserdampf — die Erschöpfung des Speichers durch völliges Erstarren seines Wasserinhalts an.

Bei Eintreten der Erschöpfung des Speichers 2 veranlaßt das Steuerorgan 74 ein Verstellen des Dreiwegventils 39, das in der zum Absorber 5 führenden Leitung angeordnet ist; dieses Ventil 39, das im Normalbetrieb die Leitungen 38 und 40 miteinander verbindet, leitet im Kaltwetterbetrieb das Wasser aus der Leitung 38 in die Leitung 52, wodurch der Absorber 5 aus dem Heizungskreislauf herausgenommen wird. Diese Operation ist in Fig. 1 mit "A" am Ausgang des Steuerorgans 74 und am Eintritt einer Signalleitung in das Ventil 39 symbolisiert.

Gleichzeitig gibt das Steuerorgan 74 Schaltbefehle C auf die Absperrorgane 56 und 61, für den Kaltwetterbetrieb durch Schließen des Organs 56 und Öffnen des Organs 61, wie beschrieben, den Eisspeicher 2 kurzzuschliessen. Schließlich gibt das Steuerorgan 74 das bereits erwähnte Signal E auf das Steuerelement 77; durch dieses wird in Abhängigkeit von dem ihm ebenfalls aufgeschalteten Signal des Steuergliedes 72 die Pumpe — bei Lufttemperaturen unter 0°C — ausgeschaltet, während sie bei Lufttemperaturen über 0°C auch beim Kaltwetterbetrieb unverändert mit voller Leistung arbeitet; das Steuerglied 72 zeigt an, ob die Außenlufttemperatur größer oder kleiner als 0°C ist.

In der Leitung 4, die den Speicher 2 mit dem Absorber 5 verbindet, kann unter Umständen ein Ventilator 78 vorgesehen sein, der von einem Motor 79 angetrieben wird. Dieser Ventilator 78 hat die Aufgabe, im Normalbetrieb der Anlage den Druck im Absorber gegenüber dem nach wie vor im Speicher 2 herrschenden Tripelpunktdruck des Wassers zu erhöhen. Der Motor 79 ist dabei von einem Ein/Aus-Steuerorgan 89 ein- bzw. ausschaltbar, das vom Vorlauftemperaturregler 44 der Heizungsanlage in Abhängigkeit vom Sollwert dieser Vorlauftemperatur betätigt wird.

Wie schon mehrfach erwähnt, lassen sich beim Betrieb der neuen Anlage im wesentlichen drei Betriebszustände unterscheiden: Der Normal-, der Kaltwetter- und der Sommerbetrieb. Wie schon teilweise im Vorhergehenden geschildert, nimmt das Arbeitsmittelwasser der Wärmepumpenanlage im Normalbetrieb und im Sommerbetrieb den Weg aus dem Speicher 2 durch den Absorber 5, wird dort absorbiert durch das Absorptionsmittel und gelangt mit diesem in den Austreiber 10, strömt dann als ausgetriebener Dampf in den Kondensator 18, wird wieder verflüssigt und fließt durch die Leitung 54 und den Kondenstopf 55 zurück in den Speicher 2, während es im Kaltwetter- oder reinen Heizbetrieb vom Kondensator 18 durch die Leitungen 54 und 59 direkt zurück in den Austreiber 10 strömt.

Wird im Normalbetrieb dem Speicher 2 mehr Wärme entzogen als ihm über den sekundären Kreislauf und die Wärmetauscher 65, 67 und 16 — gegebenenfalls über weitere nicht explizit erwähnte, beispielsweise durch Sonnenenergie direkt beheizte — zufließen kann, so kühlt sich der Speicher 2 langsam ab, wobei der Arbeitsmitteldruck in der Anlage immer weiter sinkt; bei 0°C und bei einem sich dazu selbsttätig einstellenden Wasserdampfdruck in dem Speicher 2 von 6 mbar beginnt ein Teil des Wasser bei weiterem Wärmedefizit zu erstarren. Der Speicher 2 arbeitet dann solange als Eisspeicher, bis durch eine positive Wärmebilanz, d.h. durch eine die Wärmeentnahme übersteigende Wärmezufuhr, das Wasser wieder vollständig verflüssigt und beim Anhalten dieser Energiekonstellation Dampfdruck und Temperatur in der Anlage wieder zu steigen beginnen. Die Vakuumpumpen 27 und 58 sorgen dafür, das nicht kondensierbare Gase, die durch Leckstellen in die Anlage gelangen, abgesaugt werden.

Das als Kühlmittel im Absorber 5 und Kondensator 18 verwendete Wasser der Heizungsanlage durchfließt im Normalbetrieb, aus der Rücklaufleitung 37 kommend, den Wärmetauscher 34 im Kaltwasserraum 32 des Kondensators 18 und die Leitungen 38 und 40 und gelangt in die Außenwindungen 24 und die Innenwindungen 22 der Doppelspirale 6 im Absorber 5. Von diesem strömt es in den Wärmetauscher 42, aus dem es über die Rücklaufbeimischung bei 45 als Vorlauf wieder in die Heizungsanlage gegeben wird. Liegt der Sollwert der Vorlauftemperatur für die Heizung beispielsweise über den an den Leitungen 43 angegebenen Werten von 54 bzw. 52°C, so wird, wie bereits kurz erwähnt, der Ventilator 78 in der Leitung 4 in Betrieb gesetzt. Dadurch wird der Druck im Absorber 5 gegenüber demjenigen im Verdampfer 2 um wenige mbar — beispielsweise von 6 mbar auf 8—9 mbar — erhöht, was zur Folge hat, daß die Temperatur im Absorber 5 gegenüber derjenigen bei niedrigem Druck steigt; dadurch werden wasserseitig, d.h. für den Vorlauf der Heizungsanlage, höhere Temperaturen erreicht, so daß das Vorlaufwasser auf etwa 60°C aufgeheizt werden kann. Die Inbetriebsetzung des Ventilators 78 wird dabei beispielsweise durch Überschreiten eines im Regler 44 in Abhängigkeit vom Meßwert des Außentemperaturfühlers 47 gebildeten oberen Grenzwert für diese Heizungsvorlauftemperatur ausgelöst, während beim nachfolgenden Unterschreiten dieses Grenzwertes der Motor 79 wieder stillgesetzt wird.

Bei Kaltwetterbetrieb ist der Wärmetauscher 34 nicht mit dem während diese Betriebszustandes stillgelegten Absorber 5 verbunden, sondern an ihn schließt sich in Strömungsrichtung des Heizungswassers stattdessen der Wärmetauscher 50 in der Dampfkammer 53 an, ehe wiederum der Wärmetauscher 42 durchströmt wird, von dem aus das auf seine Endtemperatur aufgeheizte Heizungswasser den gleichen Weg wie bei einem Normalbetrieb nimmt.

Im Sommerbetrieb ist die Heizungsanlage ausgeschaltet. Auch im Sommerbetrieb fördert die Pumpe 35 das als Kühlmittel durch Absorber 5 und Kondensator 18 fließende Wasser zunächst durch den Wärmetauscher 34, von hier aus jedoch in einem geschlossenen Kreislauf zur Aufheizung des Brauchwassers durch die Doppelspirale 6 des Absorbers 5, einen Teil der Leitung 41, die Leitung 78' und das Dreiwegventil 36 wieder in ihn zurück. Davon unabhängig wird das Brauchwasser durch den Wasserdampf aus dem Austreiber 10 im Hießwasserraum 33 auf die gewünschte Endtemperatur gebracht.

In Fig. 1 sind an verschiedenen Punkten des Anlageschemas Temperaturwerte eingetragen, die im Normalbetrieb in der vorbeschriebenen Anlage beispielsweise auftreten bzw. erreicht werden.

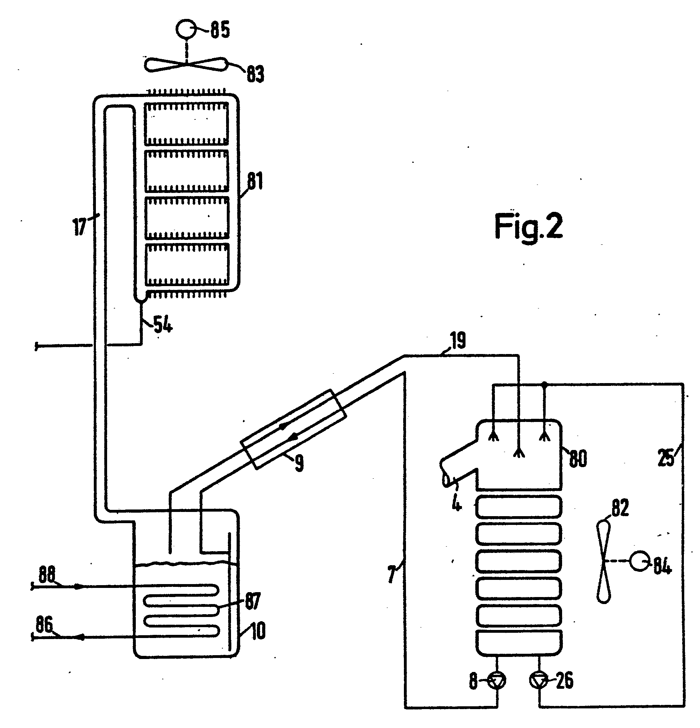

Die in Fig. 2 dargestellte Variante der Fig. 1 gibt Änderungen wieder, die bei der Anlage nach Fig. 1 vorgenommen werden können, um — besonders in heißen Gegenden mit Kontinentalklima — ausschließlich eine Kühlung eines Gebäudes zu ermöglichen.

In Fig. 2 ist der dafür notwendige Ersatz des Aussenluftwärmetauschers 65 als Niedrigtemperatur-Wärmetauscher durch einen Raumluftwärmetauscher für die zu kühlende Raumluft in einem Gebäude nicht ausdrücklich dargestellt; werden jedoch von einer Anlage weder Raum noch Brauchwasserheizung verlangt, so kann es — wie bereits erwähnt — vorteilhaft sein, als Kühlmittel für den Absorber und den Kondensator der Anlage Luft zu verwenden. Der Absorber 5 der Fig. 1 ist daher in Fig. 2 durch einen luftgekühlten Absorber 80 ersetzt; in gleicher Weise wird in einem Kondensator 81, der statt des Kondensators 18 vorgesehen ist, die Kondensationswärme an die Umgebungsluft abgeführt. Für die Förderung der Luftströme durch die Wärmetauscher 80 und 81 sind je ein Ventilator 82 und 83 angedeutet, die von Motoren 84 bzw. 85 angetrieben werden.

Weiterhin ist im Austreiber 10 — statt des Brenners 13 — ein Wärmetauscher 87 vorgesehen. Dieser ist über Leitungen 86 und 88 an eine nicht dargestellte Sonnenkollektoranordnung bekannter Bauart angeschlossen, die in diesem Fall als Hochtemperaturwärmequelle dient. Als Wärmeträgermedium zirkuliert zwischen den Sonnenkollektoren und dem Wärmetauscher 87 in einem eigenen, geschlossenen Kreislauf ebenfalls Wasser. Die Anordnung erlaubt, in Zonen, in denen vor allem eine Kühlung erforderlich ist, die meist intensive Sonneneinstrahlung für die Eiserzeugung und — speicherung während des Tages auszunutzen und das gespeicherte Eis während der Nachtstunden für die Raumkühlung zu verwenden.

Behält man den Brenner 13 jedoch in der Anlage nach Fig. 2 bei, so läßt sie sich besonders vorteilhaft so betreiben, daß bei Nacht durch Eisbildung im Speicher 2 Kälte gespeichert wird, die während des Tages zur Raumkühlung verwendet wird. In dieser Ausführungsform arbeitet die Anlage als luftgekühlte Absorptionskälteanlage, in der als "Kältespeicher" ein Eisspeicher vorhanden ist. Die Überschußwärme kann hierbei mit relativ großem Temperaturgefälle vorteilhafterweise an die kalte Nachtluft abgeführt werden.

Selbstverständlich ist es möglich, durch sinnvolle Kombinationen der in den Fig. 1 und 2 gezeigten Anlagen — beispielsweise durch eine Parallelanordnung eines Aussenluftwärmetauschers 65 und eines Raumluftwärmetauschers als Neidrigtemperatur-Wärmequellen — sowohl eine Raum- und/oder eine Brauchwasserheizung als auch eine Kühlung eines Gebäudes zu erreichen.

**Patentansprüche**

1. Absorptions-Wärmepumpenanlage für die Heizung und/oder Kühlung eines Gebäudes, in welcher Anlage Wasser als Arbeitsmittel durch Verdampfer (2), Absorber (5), Austreiber (10), Kondensator (18) und Entspannungsorgan zirkuliert, und ein auch bei hohen Konzentrationen pumpbares, hydroskopisches Absorptionsmittel mit Hilfe einer Pumpe (8) den Absorber und den Austreiber durchsetzt, wobei der Verdampfer durch eine unmittelbar Verbindung seiner freien Wasseroberfläche mit dem Absorber ein direkt arbeitender Verdampfer ist, der darüberhinaus Teil eines zweiten Wasserkreislaufs mit mindestens einer Niedrigtemperatur-Wärmequelle (65, 16) ist, dadurch gekennzeichnet, dass der Verdampfer (2) als Energiespeicher ausgebildet ist, und dass ferner das Absorptionsmittel und seine Konzentration so gewählt sind, dass die Absorbertemperatur beim am Tripelpunkt des Wassers herrschenden Druck grösser als diejenige eines ihn durchströmenden, die Absorptionswärme abführenden Kühlmittels ist.

2. Anlage nach Anspruch 1, dadurch gekennzeichnet, daß als Kühlmittel für den Absorber (5) und Kondensator (18) Wasser vorgesehen ist, das für eine Raum- und/oder Brauchwasserheizung verwendet wird.

3. Anlage nach Anspruch 1 oder 2, dadurch gekennzeichnet, daß als Niedrigtemperatur-Wärmequelle ein Außenluftwärmetauscher (65) vorgesehen ist.

4. Anlage nach einem der Ansprüche 1 bis 3, dadurch gekennzeichnet, daß als Niedrigtemperatur-Wärmequelle zusätzlich oder alternativ ein Abwasser-, Flußwasser-, Grundwasser-, Sonnenenergie- und/oder Rauchgas-Wärmetauscher (67 oder 16) vorgesehen ist.

5. Anlage nach Anspruch 2, dadurch gekennzeichnet, daß als Absorptionsmittel eine wässrige Mischung aus Natron-Kalilauge dient, deren Mengenverhältnisse von 1:3 bis 3:1 betragen.

6. Anlage nach Anspruch 1, dadurch gekennzeichnet, daß als Niedrigtemperatur-Wärmequelle ein direkter oder indirekter Kühler für die Raumluft des zu temperierenden Gebäudes vorgesehen ist.

7. Anlage nach Anspruch 1, dadurch gekennzeichnet, daß ein Lufterhitzerkreislauf als Kühlmittel für den Absorber (80) und/oder Kondensator (81) dient.

8. Anlage nach Anspruch 2, dadurch gekennzeichnet, daß die das Absorberkühlmittel führenden Rohre (22) als zweiteiliges Rohrpaket (16) ausgebildet sind, dessen einer Teil (22) von konzentriertem Absorptionsmittel in Gegenstrom beaufschlagt ist, und daß ferner am Absorber ein Zirkulationskreislauf (25) für verdünntes, d.h. mit Wasser angereichertes Absorptionsmittel vorgesehen ist, durch den das andere Teilpaket (24) beaufschlagt ist.

9. Anlage nach Anspruch 1, dadurch gekennzeichnet, daß Steuermittel (74, 56, 61) vorgesehen sind, durch die der Energiespeicher (2) in dem Arbeitsmittelkreislauf kurzgeschlossen wird, sobald sein Wasserinhalt mindestens praktisch vollständig erstarrt ist.

10. Anlage nach Anspruch 9, dadurch gekennzeichnet, daß in dem Kurzschluß-System für den Energiespeicher (2) ein Zusatzwasserspeicher (60) vorgesehen ist.

11. Anlage nach Anspruch 3, dadurch gekennzeichnet, daß der Außenluftwärmetauscher (65) des zweiten Wasserkreislaufes in Abhängigkeit von der Außentemperatur kurzschließbar ist.

12. Anlage nach Anspruch 11, dadurch gekennzeichnet, daß die Fördereinrichtung (63) des zweiten Wasserkreislaufs zweistufig ist, wobei die Stufe niederer Leistung beim Kurzschließen des Außenluftwärmetauschers (65) eingeschaltet wird.

13. Anlage nach Anspruch 11, dadurch gekennzeichnet, daß als Hochtemperatur-Wärmequelle im Austreiber (5, 87) fossile Brennstoffe und/oder Sonnenenergie-Kollektoren dienen.

14. Anlage nach Anspruch 1, dadurch gekennzeichnet, daß zwischen dem Direktverdampfer (2) und dem Absorber (5) eine Vorrichtung für die Erhöhung des Wasserdampfdruckes vorgesehen ist.

**Claims**

1. An absorption heat pump installation for heating and/or cooling a building, water circulating as the working medium in said installation through an evaporator (2), an absorber (5), a separator (10), a condenser (18) and expander, and a hygroscopic absorption medium pumpable even at high concentrations flows through the absorber and the separator by means of a pump (8), the evaporator being a directly operating evaporator by having its free water surface connected directly to the absorber, the said evaporator also forming part of a second water circuit having at least one low-temperature heat source (65, 16), characterised in that the evaporator (2) is constructed as an energy storage means and the absorption medium and its concentration are so selected that the absorber temperature at the pressure prevailing at the water triple point is higher than that of a coolant flowing through it and dissipating the heat of absorption.

2. An installation according to claim 1, characterised in that the coolant for the absorber (5) and condenser (18) is water which is used for space-heating and/or non-potable water heating.

3. An installation according to claim 1 or 2, characterised in that the low-temperature heat source is an external air heat-exchanger (65).

4. An installation according to any one of claims 1 to 3, characterised in that a waste water, river water, ground water, solar energy and/or flue gas heat exchanger (67 or 16) is provided additionally or alternatively as the low-temperature heat source.

5. An installation according to claim 2, characterised in that the absorption medium used is an aqueous mixture of caustic soda and potash solution, the relative proportions of which are 1:3 to 3:1.

6. An installation according to claim 1, characterised in that the low-temperature heat source is a direct or indirect cooler for the room air of the temperature-controlled building.

7. An installation according to claim 1, characterised in that an air-heater circuit is used as cooling means for the absorber (80) and/or condenser (81).

8. An installation according to claim 2, characterised in that the pipes (22, 24) carrying the absorber coolant are constructed as a two-part pipe set (16), of which one part (22) receives concentrated adsorption medium in counter-current, and a circulation circuit (25) for dilute (i.e. water-enriched) absorption medium feeding the other part (24) of the set is provided at the absorber.

9. An installation according to claim 1, characterised in that control means (74, 56, 61) are provided to short-circuit the energy storage means (2) in the working medium circuit as soon as its water content has at least practically competely solidified.

10. An installation according to claim 9, characterised in that the short-circuit system for the energy storage means (2) contains an additional water storage means (60).

11. An installation according to claim 3, characterised in that the external air heat-exchanger (65) of the second water circuit is adapted to be short-circuited in dependence on the external temperature.

12. An installation according to claim 11, characterised in that the second water circuit delivery means (63) is of two-stage construction, the lower-power stage being switched on when the external air heat-exchanger (65) is short-circuited.

13. An installation according to claim 1, characterised in that fossil fuels and/or solar energy collectors are used as high-temperature heat source (13) in the separator (5, 87).

14. An installation according to claim 1, characterised in that a means for raising the water vapour pressure is provided between the direct evaporator (2) and the absorber (5).

## Revendications

1. Installation à pompe à chaleur à absorption pour le chauffage et/ou le refroidissement d'un immeuble, dans laquelle de l'eau circule, en tant que fluide de travail, à travers un évaporateur (2), un absorbeur (5), un dispositif extracteur (10), un condenseur (18) et un organe de détente, et dans laquelle un fluide absorbant hygroscopique, pouvant être pompé également dans le cas de concentrations élevées, est entraîné au moyen d'une pompe (8) à travers l'absorbeur et le dispositif extracteur, l'évaporateur constituant, au moyen d'une liaison directe de son niveau libre d'eau avec l'absorbeur, un évaporateur à fonctionnement direct qui fait en outre partie d'un second circuit de circulation d'eau possédant au moins une source de chaleur (65, 16) à basse température, caractérisée par le fait que l'évaporateur (2) est réalisé sous la forme d'un accumulateur d'énergie et qu'en outre le fluide absorbant et sa concentration sont choisis de manière que, pour la pression existant au niveau du point triple de l'eau, la température de l'absorbeur soit supérieure à celle d'un fluide de refroidissement circulant dans l'absorbeur et évacuant la chaleur d'absorption.

2. Installation selon la revendication 1, caractérisée par le fait qu'il est prévu, comme fluide de refroidissement pour l'absorbeur (5) et le condenseur (18), de l'eau utilisée pour un chauffage de locaux et/ou un chauffage de l'eau à usage domestique.

3. Installation selon l'une des revendications 1 ou 2, caractérisée par le fait qu'il est prévu comme source de chaleur à basse température un échangeur de chaleur (65) utilisant l'air extérieur.

4. Installation selon l'une quelconque des revendications 1 à 3, caractérisée par le fait qu'il est prévu en supplément ou alternativement, comme source de chaleur à basse température, un échangeur de chaleur (67 ou 16), utilisant des eaux résiduaires, de l'eau de rivière, de l'eau souterraine, l'énergie solaire et/ou des gas de fumée.

5. Installation selon la revendication 2, caractérisé en ce que l'on utilise comme fluide absorbant un mélange aqueux de lessive de soude-lessive de potasse, dont le rapport quantitatif possède une valeur comprise entre 1:3 et 3:1.

6. Installation selon la revendication 1, caractérisée en ce qu'il est prévu en tant que source de chaleur à basse température un refroidisseur direct ou indirect pour l'aire ambiant de l'immeuble dont la température doit être tempérée.

7. Installation selon la revendication 1, caractérisée en ce que l'air d'un circuit réchauffeur sert de fluide de refroidissement pour l'absorbeur (80) et/ou condenseur (81).

8. Installation selon la revendication 2, caractérisée en ce que les tubes (22, 24) véhiculant le fluide de refroidissement de l'absorbeur sont réalisés sous la forme d'un faisceau tubulaire à deux éléments (16), dont une partie (22) est chargée à contre-courant par le fluide absorbant concentré, et qu'en outre il est prévu sur l'absorbeur un circuit (25) de circulation destiné au fluide absorbant dilué, c'est-à-dire enrichi avec de l'eau et par lequel l'autre faisceau partiel (24) est chargé.

9. Installation selon la revendication 1, caractérisée en ce qu'il est prévu des dispositifs de commande (74, 56, 61) au moyen desquels l'accumulateur d'énergie (2) est court-circuité dans le circuit de fluide de travail dès que son contenu en eau est au moins pratiquement complètement solidifié.

10. Installation selon la revendication 9, caractérisée en ce qu'il est prévu un accumulateur d'eau supplémentaire (60) dans le système de court-circuitage de l'accumulateur d'énergie (2).

11. Installation selon la revendication 3, caractérisée en ce que l'échangeur de chaleur (65) utilisant l'air extérieur du second circuit de circulation d'eau peut être court-circuité en fonction de la température extérieure.

12. Installation selon la revendication 11, caractérisée en ce que le dispositif d'entrainement (63) du second circuit de circulation d'eau comporte deux étages, parmi lesquels l'étage à basse puissance est branché lors du court-circuitage de l'échangeur de chaleur (65) utilisant l'air extérieur.

13. Installation selon la revendication 1, caractérisé en ce qu'on utilise, comme source de chaleur à haute température (13) dans le dispositif extracteur (5, 87), des combustibles fossiles et/ou des collecteurs solaires.

14. Installation selon la revendication 1, caractérisée en ce qu'il est prévu entre l'évaporateur direct (2) et l'absorbeur (5) un dispositif permettant d'accroître la pression de la vapeur d'eau.

Fig.1

0010551

0010551

Fig.2

2